# FASCICULE DE BREVET EUROPEEN

(11) **EP 2 179 519 B1**
(45) Date de publication et mention de la délivrance du brevet: **14.12.2011**
(21) Numéro de dépôt: 08826638.2
(22) Date de dépôt: 17.07.2008
(51) Int. Cl.: H04B 7/06, H04L 1/06, H04L 27/26

(54) **EMISSION DE SIGNAL PAR PLUSIEURS ANTENNES**
SIGNALÜBERTRAGUNG MITHILFE MEHRERER ANTENNEN
SIGNAL TRANSMISSION USING MULTIPLE ANTENNAS

(30) Priorité: 20.07.2007 FR 0705306
(43) Date de publication de la demande: 28.04.2010
(73) Titulaire: EADS Secure Networks, 78990 Elancourt (FR)
(72) Inventeur: MEGE, Philippe, F-92340 Bourg La Reine (FR)
(74) Mandataire: Bloch & Bonnétat
(86) Numéro de dépôt international: PCT/FR2008/051348
(87) Numéro de publication internationale: WO 2009/013436

(56) Documents cités:
- WO-A-2006/017850
- US-A1- 2007 105 508

## Description

La présente invention concerne l'émission de signal radioélectrique depuis un émetteur comprenant au moins deux antennes d'émission. Plus particulièrement, l'invention est dirigée vers l'émission d'un signal comprenant des symboles répartis suivant des dimensions fréquentielle et temporelle, ayant par exemple subi une modulation selon un multiplexage par répartition en fréquences orthogonales OFDM ("Orthogonal Frequency Division Multiplexing" en anglais).

L'invention trouve des applications notamment dans le domaine des systèmes de radiocommunication professionnelles PMR ("Professional Mobile Radio" en anglais).

Dans l'état de la technique, il est connu de recourir à un émetteur comprenant plusieurs antennes d'émission pour diminuer des affaiblissements de trajets subis par le signal émis, plusieurs versions du signal transmis à travers un canal à trajets multiples étant reçues dans un récepteur à des instants différents.

Le brevet US 6.185.258 propose d'émettre par exemple deux symboles d'un signal par des première et deuxième antennes d'émission pendant deux instants successifs. Au premier instant, le premier symbole et le deuxième symbole sont émis respectivement par les première et deuxième antennes. Au deuxième instant, l'opposé ou le conjugué ou l'opposé du conjugué du deuxième symbole est émis par la première antenne et l'opposé ou le conjugué ou l'opposé du conjugué du premier symbole est émis par la deuxième antenne. Cette redondance du signal permet de déterminer plus simplement le signal reçu et de bénéficier d'un gain en diversité d'ordre 2 dû aux deux canaux de propagation du signal relatifs aux deux antennes d'émission.

Il est aussi fait référence au document WO 2006/0117850.

L'invention a pour objectif de bénéficier de la diversité relative à au moins deux antennes d'émission d'un émetteur de radiocommunication sans émettre deux fois le même signal par les deux antennes d'émission.

Pour atteindre cet objectif, un procédé pour émettre dans un émetteur de radiocommunication un signal par au moins deux antennes, le signal contenant des bits codés qui sont convertis en des symboles distribués suivant des sous-porteuses et des intervalles de temps, est caractérisé en ce qu'il comprend les étapes suivantes :
une répartition de l'ensemble des symboles du signal en autant de sous-ensembles disjoints de symboles du signal que l'émetteur de radiocommunication comporte d'antennes, chaque sous-ensemble étant propre à l'une des antennes, l'union desdits sous-ensembles étant l'ensemble des symboles du signal, des symboles étant répartis entre au moins deux sous-ensembles pendant au moins un intervalle de temps du signal, et des symboles étant répartis entre au moins deux sous-ensembles pour au moins une sous-porteuse,
une génération pour chaque antenne d'un signal à émettre comportant les symboles du sous-ensemble propre à ladite antenne, les symboles du sous-ensemble étant distribués suivant les mêmes sous-porteuses et intervalles de temps que ceux du signal, et
une émission synchrone des signaux générés respectivement par les antennes.

Les symboles du signal à émettre par l'émetteur sont répartis entre les antennes d'émission de l'émetteur. Par conséquent, le contenu de chaque bit d'information utile du signal à émettre est étalé sur des sous-porteuses et des intervalles de temps du signal après le codage et la conversion en symboles, puis réparti entre les antennes de l'émetteur. Un récepteur recevant les sous-ensembles de symboles émis respectivement par les antennes d'émission récupère une diversité relative aux antennes d'émission après le décodage des symboles reçus, en retrouvant le contenu de chaque bit d'information utile qui a été réparti dans un repère temps-fréquence représentant les sous-porteuses et les intervalles de temps du signal et entre les antennes d'émission.

Chacun des symboles du signal à émettre est émis une seule fois et par une seule antenne d'émission. Chaque sous-ensemble de symboles émis par une antenne d'émission contient donc un nombre de symboles inférieur à celui contenu dans le signal initial à émettre.

Par ailleurs, pour chaque sous-ensemble de symboles émis par une antenne de l'émetteur, un faible nombre de symboles est émis simultanément par intervalle de temps. L'écart entre des pics de puissance et la puissance moyenne du signal émis est donc faible. En particulier, plus le nombre de symboles émis par intervalle de temps est faible, plus cet écart est faible. Ceci permet de réduire la contrainte de linéarisation de la chaîne d'émission, et plus particulièrement de l'amplificateur de puissance et donc d'améliorer le rendement de ce dernier.

Selon une autre caractéristique de l'invention, le procédé peut comprendre en outre un entrelacement des bits codés du signal avant la conversion de ces derniers en les symboles du signal.

La diversité relative aux antennes d'émission peut être précisée par un entrelacement des bits codés du signal, et donc par un étalement prédéterminé du contenu de chaque bit d'information utile du signal à émettre sur les sous-porteuses et les intervalles de temps du signal à émettre.

Selon d'autres caractéristiques de l'invention, les sous-ensembles de symboles peuvent comprendre un nombre de symboles sensiblement identique par rapport à la totalité des sous-porteuses et des intervalles de temps du signal, ou pour chaque intervalle de temps du signal, ou encore pour chaque sous-porteuse du signal.

Avantageusement, les symboles répartis respectivement vers les antennes peuvent être équirépartis selon les intervalles de temps et/ou les sous-porteuses du signal afin de bénéficier de manière équitable de la diversité relative à chacune des antennes de l'émetteur.

Chaque sous-ensemble de symboles est complété par des valeurs nulles dans un repère temps-fréquence représentant les sous-porteuses et les intervalles de temps du signal.

Le gabarit du signal émis par chaque antenne de l'émetteur est identique à celui du signal initial à émettre. Chaque antenne n'émet que le sous-ensemble de symboles propre à l'antenne, de sorte que le traitement du signal reçu par le récepteur pour une antenne d'émission donnée est limité au sous-ensemble de symboles émis par cette antenne.

L'invention concerne également un émetteur pour émettre un signal par au moins deux antennes, le signal contenant des bits codés qui sont convertis en des symboles distribués suivant des sous-porteuses et des intervalles de temps, caractérisé en ce qu'il comprend :
un moyen pour répartir l'ensemble des symboles du signal en autant de sous-ensembles disjoints de symboles du signal que l'émetteur de radiocommunication comporte d'antennes, chaque sous-ensemble étant propre à l'une des antennes, l'union desdits sous-ensembles étant l'ensemble des symboles du signal, des symboles étant répartis entre au moins deux sous-ensembles pendant au moins un intervalle de temps du signal, et des symboles étant répartis entre au moins deux sous-ensembles pour au moins une sous-porteuse,
un moyen pour générer pour chaque antenne un signal à émettre comportant les symboles du sous-ensemble propre à ladite antenne, les symboles du sous-ensemble étant distribués suivant les mêmes sous-porteuses et intervalles de temps que ceux du signal, et
des moyens pour émettre de manière synchrone les signaux générés respectivement par les antennes.

Enfin, l'invention se rapporte à un programme d'ordinateur apte à être mis en oeuvre dans un émetteur pour émettre un signal par au moins deux antennes, ledit programme comprenant des instructions qui, lorsque le programme est exécuté dans ledit émetteur, réalisent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un émetteur de radiocommunication à plusieurs antennes selon l'invention ;
- la figure 2 est un bloc-diagramme schématique d'un récepteur de radiocommunication à une antenne selon l'invention ;
- la figure 3 est un algorithme d'un procédé d'émission de signal selon l'invention ; et
- la figure 4 montre un exemple de répartition de symboles dans un repère temps-fréquence entre deux antennes d'émission selon l'invention.

De manière générale, l'invention décrite ci-après est relative à un émetteur de radiocommunication dans un réseau de radiocommunication cellulaire numérique. L'émetteur possède au moins deux antennes d'émission et communique avec un récepteur à une antenne de réception, ou bien plusieurs antennes de réception. Par exemple, l'émetteur et le récepteur sont respectivement inclus dans une station de base et un terminal mobile, et communiquent entre eux selon un multiplexage par répartition en fréquences orthogonales OFDM.

Selon un premier exemple, le réseau de radiocommunication est un réseau de radiocommunication cellulaire numérique terrestre ou aéronautique ou par satellites, ou bien un réseau local sans fil de type WLAN ("Wireless Local Area Network" en anglais) ou WIMAX ("World wide Interoperability Microwave Access" en anglais), ou bien un réseau de radiocommunication professionnelles PMR ("Professional Mobile Radio" en anglais).

Selon un deuxième exemple, le réseau de radiocommunication est un réseau local sans fil adhoc dépourvu d'infrastructure. L'émetteur et le récepteur communiquent directement entre eux de manière spontanée sans l'intermédiaire d'un équipement de centralisation de communication comme un point ou une borne d'accès ou bien une station de base.

Dans le réseau de radiocommunication, des interférences entre symboles dues aux trajets multiples de propagation dans un signal d'usager et des interférences d'accès multiple entre des signaux de plusieurs usagers sont engendrées par la propagation dans le canal de propagation et dégradent la qualité du signal reçu. Ces dégradations sont réduites par une estimation de la fonction de transfert du canal de propagation qui est effectuée par exemple à l'aide d'information connue par avance du récepteur, comme une séquence pilote transmise par l'émetteur et répartie sur des symboles pilotes placés dans chaque trame de signal OFDM sur certaines positions dans les deux dimensions fréquentielle et temporelle.

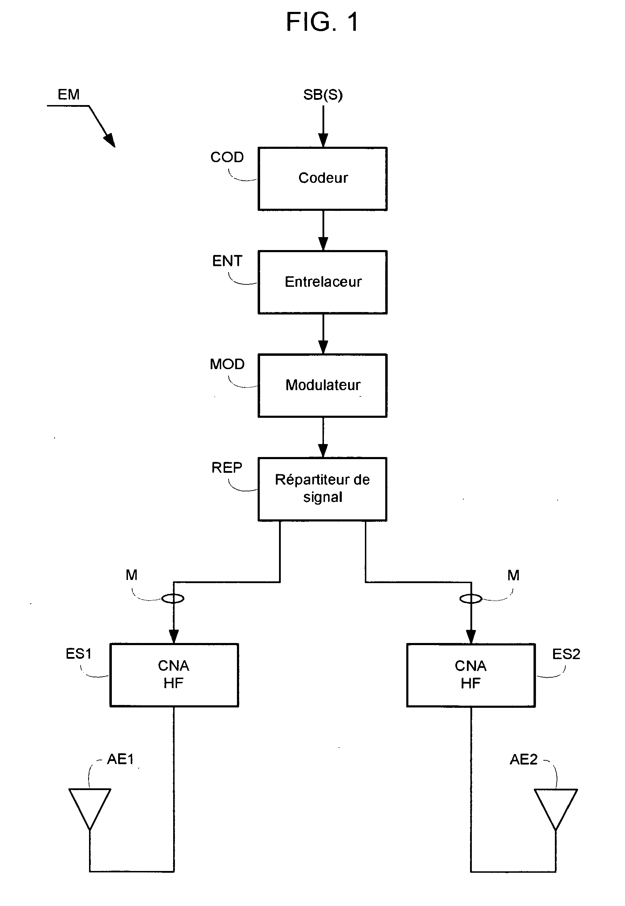

La figure 1 montre des moyens fonctionnels inclus dans un émetteur de radiocommunication EM pour la mise en oeuvre du procédé de l'invention dans un réseau de radiocommunication numérique. L'émetteur EM comprend notamment un codeur de canal COD, optionnellement un entrelaceur ENT, un modulateur MOD, un répartiteur de signal REP et plusieurs antennes d'émission. Afin de ne pas surcharger la figure 1, on supposera ci-après que l'émetteur EM comprend au moins deux antennes d'émission AE1 et AE2, chacune étant reliée au répartiteur de signal REP via un étage de sortie respectif ES1, ES2.

L'émetteur EM traite une trame radio d'un signal S contenant une séquence de bits SB qui sont répartis et transmis au moyen des deux antennes d'émission AE1 et AE2.

Des bits d'information utile contenus dans une séquence de bits SB sont codés par le codeur COD, puis éventuellement entrelacés par l'entrelaceur ENT avant d'être convertis en des symboles selon un multiplexage OFDM par le modulateur MOD. Les symboles sont répartis sur des porteuses orthogonales entre elles couvrant une large bande de fréquence et forment une trame de signal OFDM. Des symboles pilotes peuvent être placés dans la trame de signal OFDM afin de faciliter l'estimation de la fonction de transfert du canal de propagation entre l'émetteur et un récepteur à la réception de la trame.

Par exemple, le signal S est à émettre sur M sous-porteuses dans une trame divisée en N intervalles de temps de symbole consécutifs dédiés chacun à la transmission de M symboles. Les symboles sont donc répartis dans un repère temps-fréquence représentant les N intervalles de temps et les M sous-porteuses du signal à émettre.

Les symboles sont fournis au répartiteur de signal REP qui sélectionne à chaque trame un sous-ensemble de symboles ayant des positions prédéterminées dans le repère temps-fréquence pour chacune des antennes d'émission. Les sous-ensembles de symboles sélectionnés respectivement pour les antennes d'émission sont des sous-ensembles disjoints dont l'union est l'ensemble des symboles de la trame de signal OFDM, chacun des sous-ensembles comportant éventuellement des symboles pilotes afin de permettre au récepteur d'estimer le canal de propagation pour chacune des antennes d'émission.

Le répartiteur de signal REP fournit un sous-ensemble de symboles sélectionné à chaque étage de sortie ES1, ES2 relié à l'antenne d'émission AE1, AE2 respective. Par exemple, le sous-ensemble de symboles est transmis sur M voies parallèles correspondant aux M sous-porteuses du signal à émettre.

Dans l'étage de sortie, le sous-ensemble de symboles sélectionné est modulé sur les sous-porteuses puis le signal résultant subit une conversion numérique-analogique avant d'être amplifié et transposé à haute fréquence. L'étage de sortie fournit en sortie un signal qui est à émettre par l'antenne d'émission correspondante.

Les antennes d'émission émettent ainsi en parallèle des signaux contenant chacun des symboles différents pendant la durée de la trame radio.

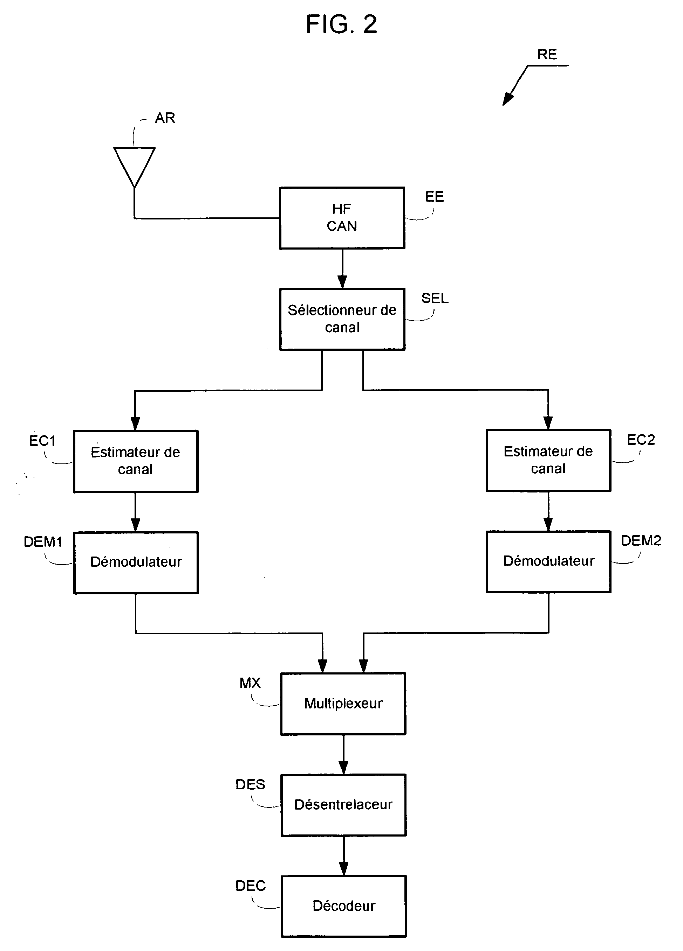

La figure 2 montre des moyens fonctionnels inclus dans un récepteur de radiocommunication RE traitant les signaux émis respectivement par les antennes d'émission de l'émetteur EM.

Le récepteur RE comprend au moins une antenne de réception AR, un étage d'entrée EE, un sélectionneur de canal SEL, un multiplexeur MX, un désentrelaceur DES et un décodeur de canal DEC. Afin de ne pas surcharger la figure 2, on supposera ci-après que le récepteur RE comprend également au moins deux estimateurs de canal EC1 et EC2, et deux démodulateurs DEM1 et DEM2, chaque couple d'estimateur de canal et de démodulateur EC1-DEM1, EC2-DEM2 traitant le signal émis par l'une respective des antennes d'émission de l'émetteur. Le récepteur RE comprend autant de couples d'estimateur de canal et de démodulateur que l'émetteur comprend d'antennes d'émission.

Chaque signal reçu par le récepteur RE à travers le canal de propagation entre l'émetteur EM et le récepteur RE traverse par exemple dans l'étage d'entrée EE des étages d'amplification, de transposition en bande de base, de conversion analogique-numérique et de suppression d'intervalle de garde.

Le sélectionneur de canal SEL détermine le canal de propagation à travers lequel a été transmis le signal reçu, c'est-à-dire l'antenne d'émission depuis laquelle a été émis le signal reçu. Il est supposé que l'émetteur et le récepteur sont synchronisés, de sorte que le sélectionneur de canal SEL connaisse l'antenne d'émission AE1, AE2 à l'origine du signal reçu et sélectionne l'estimateur de canal EC1, EC2 approprié au canal de propagation du signal reçu. Dans un souci de logique, il est supposé que les estimateurs de canal EC1 et EC2 et les démodulateurs DEM1 et DEM2 traitent les signaux respectivement émis par les antennes d'émission AE1 et AE2.

L'estimateur de canal EC1, EC2 estime la fonction de transfert du canal de propagation du signal reçu par exemple à l'aide de symboles pilotes contenus dans le signal reçu, ces symboles pilotes étant préalablement enregistrés en mémoire dans le récepteur. L'estimateur de canal détermine une estimée de canal définie par des coefficients estimés de la fonction de transfert du canal de propagation entre l'antenne d'émission AE1, AE2 et le récepteur.

L'estimateur de canal EC1, EC2 égalise en outre les symboles reçus en des symboles égalisés en fonction de coefficients estimés de la fonction de transfert du canal de propagation. Par exemple, les symboles égalisés dépendent de la division des symboles reçus par les coefficients estimés.

Le démodulateur DEM1, DEM2 démodule les symboles égalisés en des bits démodulés, selon le type de modulation des symboles, par exemple selon une démodulation d'amplitude en quadrature de phase QAM4 ("Quadrature Amplitude Modulation" en anglais). Ces symboles égalisés peuvent être mémorisés et fournis au désentrelaceur DES et/ou au décodeur DEC.

En outre, le démodulateur DEM1, DEM2 détermine une vraisemblance de chaque bit contenu dans un symbole égalisé. La vraisemblance a une valeur "douce" ("soft value" en anglais) négative ou positive (flottante), par comparaison à une valeur "dure" ("hard value" en anglais) telle que la valeur binaire "1" ou "0", pour indiquer que le démodulateur DEM délivre des valeurs flottantes réelles ayant chacune un signe qui impose une décision ultérieure sur l'état du bit correspondant, c'est-à-dire une décision sur la valeur "dure" "0" ou "1". L'amplitude de la vraisemblance représente la fiabilité de la décision ultérieure et est une valeur "souple" qui représente un indice de confiance de l'état binaire déterminé par le signe de la vraisemblance. Par exemple, si cette amplitude est petite et voisine de 0, l'état binaire correspondant au signe de la vraisemblance n'est pas sûr.

Le multiplexeur MX récupère les bits démodulés issus des démodulateurs DEM1 et DEM2 et multiplexe ces derniers pour former une série de bits démodulés dans le même ordre que les bits codés fournis au modulateur MOD de l'émetteur EM avant l'émission du signal.

Optionnellement, si les bits du signal reçu ont été entrelacés dans l'entrelaceur ENT avant d'être émis, le multiplexeur MX fournit en série les valeurs numériques de vraisemblance des bits démodulés au désentrelaceur DES. Ce dernier effectue un désentrelacement des vraisemblances des bits démodulés selon un algorithme de désentrelacement de canal réciproque à un algorithme d'entrelacement de canal utilisé dans l'entrelaceur ENT de l'émetteur, afin d'inhiber l'entrelacement introduit à l'émission du signal.

Le décodeur DEC décode les bits démodulés fournis par le multiplexeur MX, ou éventuellement les bits désentrelacés fournis par le désentrelaceur DES, en fonction des vraisemblances précédemment déterminées. Le décodeur DEC effectue une décision dure et délivre des bits décodés, selon le décodage correspondant au codage utilisé par le codeur COD à l'émission du signal, par exemple selon un décodage convolutif qui corrige les erreurs au moyen de l'algorithme de Viterbi.

Après le décodage des bits, le récepteur bénéficie d'un gain de diversité par rapport au canal de propagation à travers lequel la séquence de bits SB initiale a été émise. La diversité du canal de propagation est ainsi récupérée par le décodage des bits et éventuellement par le désentrelacement des bits qui ont été répartis dans l'ensemble du repère temps-fréquence.

En variante, le récepteur RE comprend plusieurs antennes de réception et plusieurs sélectionneurs de canal. Les sélectionneurs de canal sont respectivement associés aux antennes de réception afin de déterminer, pour chaque antenne de réception, le canal de propagation à travers lequel a été transmis le signal reçu.

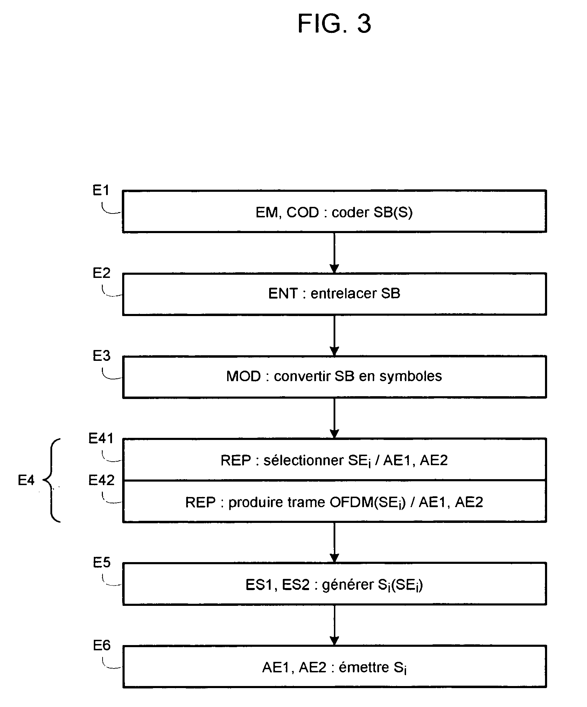

En référence à la **figure 3**, le procédé d'émission de signal selon l'invention comprend des étapes E1 à E6 exécutées automatiquement dans l'émetteur EM qui est supposé comprendre deux antennes d'émission AE1 et AE2.

A l'étape E1, l'émetteur EM reçoit en entrée une séquence de bits SB d'un signal S à émettre au moyen des deux antennes d'émission AE1 et AE2. Le codeur COD code la séquence de bits SB en une séquence de bits codés. Le nombre de bits codés est supérieur au nombre de bits de la séquence SB. De manière générale, le codeur COD ajoute de la redondance aux informations utiles, de sorte que le récepteur puisse détecter et corriger des erreurs dues à la transmission du signal à travers le canal de propagation entre l'émetteur EM et le récepteur RE, lors du décodage du signal par le récepteur. Les bits codés sont par exemple issus d'un codage en bloc ou d'un codage convolutionnel.

A l'étape optionnelle E2, les bits codés de la séquence de bits SB sont fournis à l'entrelaceur ENT et sont entrelacés selon un algorithme prédéfini pour former une séquence de bits entrelacés. Le contenu de chaque bit d'information utile est étalé sur une partie de la séquence de bits entrelacés.

Par exemple, l'entrelacement est aléatoire, de sorte que tous les bits codés sont très mélangés dans la séquence de bits entrelacés.

A l'étape E3, le modulateur MOD convertit la séquence de bits codés, éventuellement entrelacés, en des symboles selon un multiplexage OFDM formant une trame de signal OFDM. Les symboles sont distribués sur M sous-porteuses orthogonales entre elles couvrant une large bande de fréquence dans une trame divisée en N intervalles de temps de symbole consécutifs dédiés chacun à la transmission de M symboles. Le contenu de chaque bit d'information utile est ainsi réparti dans le repère temps-fréquence, c'est-à-dire sur différentes sous-porteuses et/ou différents intervalles de temps. Le modulateur MOD fournit les symboles au répartiteur de signal REP.

A l'étape E4, le répartiteur de signal REP répartit les symboles entre les antennes d'émission pour que ces dernières émettent ces symboles simultanément pendant la durée de la trame de signal OFDM, selon des sous-étapes E41 et E42.

A la sous-étape E41, le répartiteur de signal REP sélectionne pour chaque antenne un sous-ensemble SEi de symboles dont les positions sont prédéterminées, avec 1 ≤ i ≤ I et I étant le nombre d'antennes de l'émetteur. Par exemple, des positions de symboles dans le repère temps-fréquence ont été déterminées au préalable pour chacune des antennes d'émission. Chaque sous-ensemble de symboles sélectionné SEi est propre à une antenne d'émission et associé à cette dernière. En particulier, des symboles sont répartis entre au moins deux sous-ensembles pour au moins un intervalle de temps. Par ailleurs, les sous-ensembles de symboles sélectionnés sont disjoints et l'union de ces derniers est égale à l'ensemble des symboles de la trame de signal OFDM. Le répartiteur de signal REP répartit ainsi l'ensemble des symboles de la trame de signal OFDM en autant de sous-ensembles disjoints SEi que l'émetteur comprend d'antennes. A titre d'exemple, au moins un symbole de chaque intervalle de temps est sélectionné pour chaque antenne d'émission.

Dans un cas particulier, les symboles de la trame de signal OFDM sont statistiquement équirépartis dans les sous-ensembles de symboles respectivement associés aux antennes d'émission. Les sous-ensembles de symboles sélectionnés respectivement pour les antennes comprennent donc un nombre de symboles sensiblement identique. Puisque l'émetteur comprend deux antennes d'émission, deux sous-ensembles de symboles distincts sont sélectionnés et comprennent chacun sensiblement la moitié des symboles de la trame de signal OFDM. En variante, si l'émetteur comprend plus de deux antennes, le nombre de symboles associés à chaque antenne est sensiblement égal à la partie entière du produit du nombre de sous-porteuses par le nombre d'intervalles de temps divisé par le nombre d'antennes d'émission.

Dans un autre cas particulier, à chaque temps symbole, c'est-à-dire à chacun des N intervalles de temps de la trame, chaque antenne est associée au même nombre de symboles. Par exemple, si la bande de fréquence contient dix sous-porteuses, des sous-ensembles distincts de cinq symboles sont respectivement associés aux deux antennes d'émission AE1 et AE2 pour chaque intervalle de temps. En outre, chaque antenne peut être associée à un même nombre de symboles pour chaque sous-porteuse du signal.

A la sous-étape E42, pour chaque antenne d'émission, le répartiteur de signal REP place le sous-ensemble de symboles sélectionné SEi dans le repère temps-fréquence et complète ce dernier par des valeurs nulles. Par conséquent, pour chaque antenne d'émission est produite une trame de signal OFDM, de sorte qu'à chaque intervalle de temps, des sous-ensembles de symboles différents sont à émettre respectivement par les antennes. En d'autres termes, cela revient à dupliquer la trame de signal OFDM pour chacune des antennes d'émission, à sélectionner pour chaque antenne un sous-ensemble de symboles dont les positions sont prédéterminées, puis à mettre à zéro les symboles non sélectionnés. Les trames de signal OFDM produites respectivement pour les antennes d'émission ont donc un gabarit identique à celui de la trame de signal OFDM formée par le modulateur MOD à l'issue de l'étape E3.

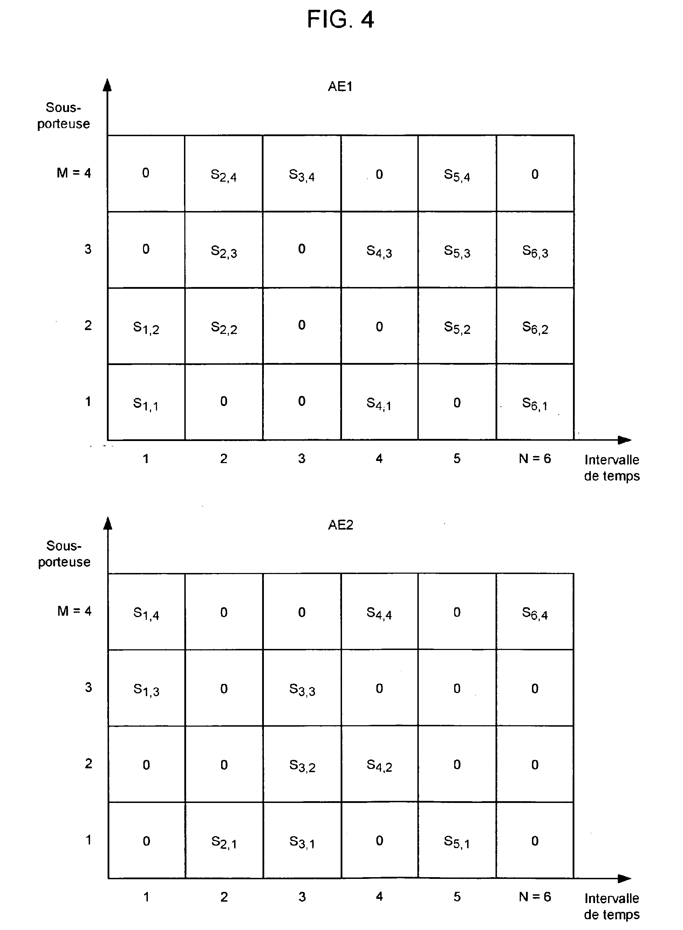

A titre d'exemple montré à la figure 4, les symboles de la trame de signal OFDM sont répartis dans le repère temps-fréquence sur M = 4 sous-porteuses et N = 6 intervalles de temps. L'émetteur comprend deux antennes d'émission AE1 et AE2. Deux sous-ensembles de symboles distincts sont sélectionnés respectivement pour ces dernières et comprennent chacun sensiblement la moitié des symboles de la trame de signal OFDM, c'est-à-dire 14 et 10 symboles respectivement pour les antennes d'émission AE1 et AE2. La notation Sₙ,ₘ désigne un symbole à émettre au n^{ième} intervalle de temps sur la m^{ième} sous-porteuse de la trame de signal OFDM, avec 1 ≤ n ≤ N et 1 ≤ m ≤ M. Par exemple, au premier intervalle de temps, des symboles S_{1,1} et S_{1,2} sont à émettre respectivement sur les première et deuxième sous-porteuses par l'antenne AE1, tandis que des symboles S_{1,3} et S_{1,4} sont à émettre respectivement sur les troisième et quatrième sous-porteuses par l'antenne AE2, les deux antennes AE1 et AE2 émettant ainsi un nombre égal de symboles.

A l'étape E5, le répartiteur de signal REP fournit les trames de signal OFDM produites respectivement aux étages de sortie ES1 et ES2. Chaque étage de sortie ES1, ES2 applique une modulation sur les sous-porteuses puis une conversion numérique-analogique, une amplification et une transposition à haute fréquence aux symboles de la trame fournie pour générer un signal Si à émettre par l'antenne d'émission reliée à l'étage de sortie, avec 1 ≤ i ≤ I et I étant le nombre d'antennes de l'émetteur. Le signal généré Si à émettre par une antenne donnée comporte donc les symboles du sous-ensemble de symboles SEi propre à cette antenne donnée et chaque symbole du sous-ensemble est placé dans le repère temps-fréquence à la même position qu'il occupait initialement dans la trame de signal OFDM.

A l'étape E6, chaque signal généré Si est émis par l'antenne pour laquelle le signal a été généré. Les antennes d'émission émettent respectivement les signaux générés de manière synchrone.

De manière générale lorsque l'émetteur comprend plusieurs antennes d'émission, chaque symbole ayant une position donnée dans le repère temps-fréquence est émis par une seule antenne, tandis que les autres antennes n'émettent pas de symbole pour cette position donnée dans le repère temps-fréquence.

Le récepteur RE reçoit ensuite les différents signaux émis par l'émetteur EM et bénéficie d'un gain en diversité après le décodage du signal reçu comme décrit précédemment. Le faible nombre de symboles émis par intervalle de temps réduit l'écart entre des pics de puissance et la puissance moyenne du signal émis, c'est-à-dire le rapport de la puissance crête sur la puissance moyenne du signal émis, également nommé PAPR ("Peak-to-Average Power Ratio" en anglais). Celui-ci est d'autant plus réduit que les symboles de la trame de signal OFDM sont équidistribués en fréquence pour chacun des différents intervalles de temps et pour chacune des antennes d'émission.

L'invention décrite ici concerne un procédé et un émetteur pour émettre un signal par au moins deux antennes. Selon une implémentation, les étapes du procédé de l'invention sont déterminées par les instructions d'un programme d'ordinateur incorporé dans l'émetteur. Le programme comporte des instructions de programme qui, lorsque ledit programme est exécuté dans l'émetteur dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

## Revendications

1. Procédé dans un émetteur de radiocommunication (EM) pour émettre un signal (S) par au moins deux antennes (AE1, AE2), le signal contenant des bits codés qui sont convertis (E3) en des symboles distribués suivant des sous-porteuses et des intervalles de temps, **caractérisé en ce qu'**il comprend les étapes suivante :
une répartition (E4) de l'ensemble des symboles du signal en autant de sous-ensembles (SEi) disjoints de symboles du signal que l'émetteur de radiocommunication (EM) comporte d'antennes (AE1, AE2), chaque sous-ensemble (SEi) étant propre à l'une des antennes (AE1, AE2), l'union desdits sous-ensembles étant l'ensemble des symboles du signal (S), des symboles étant répartis entre au moins deux sous-ensembles pendant au moins un intervalle de temps du signal (S), et des symboles étant répartis entre au moins deux sous-ensembles pour au moins une sous-porteuse,
une génération (E5) pour chaque antenne (AE1; AE2) d'un signal à émettre (Si) comportant les symboles du sous-ensemble (SEi) propre à ladite antenne (AE1; AE2), les symboles du sous-ensemble (SEi) étant distribués suivant les mêmes sous-porteuses et intervalles de temps que ceux du signal (S), et
une émission (E6) synchrone des signaux générés (Si) respectivement par les antennes (AE1, AE2).

2. Procédé conforme à la revendication 1, comprenant un entrelacement des bits codés du signal avant la conversion de ces derniers en les symboles du signal.

3. Procédé conforme à la revendication 1 ou 2, selon lequel les sous-ensembles de symboles comprennent un nombre de symboles sensiblement identique.

4. Procédé conforme à l'une quelconque des revendications 1 à 3, selon lequel les sous-ensembles de symboles comprennent un nombre de symboles sensiblement identique pour chaque intervalle de temps du signal.

5. Procédé conforme à l'une quelconque des revendications 1 à 4, selon lequel les sous-ensembles de symboles comprennent un nombre de symboles sensiblement identique pour chaque sous-porteuse du signal.

6. Emetteur de radiocommunication (EM) pour émettre un signal (S) par au moins deux antennes (AE1, AE2), le signal contenant des bits codés qui sont convertis en des symboles distribués suivant des sous-porteuses et des intervalles de temps, **caractérisé en ce qu'**il comprend :
un moyen (REP) pour répartir l'ensemble des symboles du signal en autant de sous-ensembles (SEi) disjoints de symboles du signal que l'émetteur de radiocommunication (EM) comporte d'antennes (AE1, AE2), chaque sous-ensemble (SEi) étant propre à l'une des antennes (AE1, AE2), l'union desdits sous-ensembles étant l'ensemble des symboles du signal (S), des symboles étant répartis entre au moins deux sous-ensembles pendant au moins un intervalle de temps du signal (S), et des symboles étant répartis entre au moins deux sous-ensembles pour au moins une sous-porteuse,
un moyen (ES1; ES2) pour générer pour chaque antenne (AE1; AE2) un signal à émettre (Si) comportant les symboles du sous-ensemble (SEi) propre à ladite antenne (AE1; AE2), les symboles du sous-ensemble (SEi) étant distribués suivant les mêmes sous-porteuses et intervalles de temps que ceux du signal (S), et
des moyens (ES1, AE1; ES2, AE2) pour émettre de manière synchrone les signaux générés (Si) respectivement par les antennes.

7. Programme d'ordinateur apte à être mis en oeuvre dans un émetteur (EM) pour émettre un signal par au moins deux antennes (AE1, AE2), le signal contenant des bits codés qui sont convertis (E3) en des symboles distribués suivant des sous-porteuses et des intervalles de temps, ledit programme étant **caractérisé en ce qu'**il comprend des instructions qui, lorsque le programme est exécuté dans ledit émetteur, réalisent les étapes suivante :
une répartition (E4) de l'ensemble des symboles du signal en autant de sous-ensembles (SEi) disjoints de symboles du signal que l'émetteur de radiocommunication (EM) comporte d'antennes (AE1, AE2), chaque sous-ensemble (SEi) étant propre à l'une des antennes (AE1, AE2), l'union desdits sous-ensembles étant l'ensemble des symboles du signal (S), des symboles étant répartis entre au moins deux sous-ensembles pendant au moins un intervalle de temps du signal (S), et des symboles étant répartis entre au moins deux sous-ensembles pour au moins une sous-porteuse,
une génération (E5) pour chaque antenne (AE1; AE2) d'un signal à émettre (Si) comportant les symboles du sous-ensemble (SEi) propre à ladite antenne (AE1; AE2), les symboles du sous-ensemble (SEi) étant distribués suivant les mêmes sous-porteuses et intervalles de temps que ceux du signal (S), et
une émission (E6) synchrone des signaux générés (Si) respectivement par les antennes (AE1, AE2).

## Claims

1. Method in a radiocommunication transmitter (EM) for transmitting a signal (S) by at least two antennas (AE1, AE2), the signal containing encoded bits that are converted (E3) into symbols distributed according to subcarriers and time intervals, **characterised in that** the method comprises the following steps:
distribution (E4) of the set of the signal symbols into as many separate subsets (SEᵢ) of signal symbols as the radio communication transmitter (EM) comprises antennas (AE1, AE2), each subset (SEᵢ) being allocated to one of the antennas (AE1, AE2), the union of said subsets being the set of the signal (S) symbols, symbols being distributed between at least two subsets during at least one time interval of the signal (S), and symbols being distributed between at least two subsets for at least one subcarrier,
generation (E5) for each antenna (AE1; AE2) of a signal to be transmitted (Sᵢ) comprising the symbols of the subset (SEᵢ) allocated to said antenna (AE1; AE2), the symbols of the subset (SEᵢ) being distributed according to the same subcarriers and time intervals as those of the signal (S), and
synchronous transmission (E6) of the signals generated (Sᵢ) respectively by the antennas (AE1, AE2).

2. Method according to claim 1, comprising interleaving of the encoded bits of the signal before the conversion thereof into the signal symbols.

3. Method according to either claim 1 or claim 2, wherein the subsets of symbols comprise a substantially identical number of symbols.

4. Method according to any one of claims 1 to 3, wherein the subsets of symbols comprise a substantially identical number of symbols for each time interval of the signal.

5. Method according to any one of claims 1 to 4, wherein the subsets of symbols comprise a substantially identical number of symbols for each subcarrier of the signal.

6. Radiocommunication transmitter (EM) for transmitting a signal (S) by at least two antennas (AE1, AE2), the signal containing encoded bits that are converted into symbols distributed according to subcarriers and time intervals, **characterised in that** the transmitter comprises:
means (REP) for distributing the set of the signal symbols into as many separate subsets (SEᵢ) of signal symbols as the radiocommunication transmitter (EM) comprises antennas (AE1, AE2), each subset (SEᵢ) being allocated to one of the antennas (AE1, AE2), the union of said subsets being the set of the signal (S) symbols, symbols being distributed between at least two subsets during at least one time interval of the signal (S), and symbols being distributed between at least two subsets for at least one subcarrier,
means (ES1; ES2) for generating for each antenna (AE1; AE2) a signal to be transmitted (Sᵢ) comprising the symbols of the subset (SEᵢ) allocated to said antenna (AE1; AE2), the symbols of the subset (SEᵢ) being distributed according to the same subcarriers and time intervals as those of the signal (S), and
means (ES1, AE1; ES2, AE2) for transmitting synchronously the signals generated (Sᵢ) respectively by the antennas.

7. Computer program suitable for implementation in a transmitter (EM) for transmitting a signal by at least two antennas (AE1, AE2), the signal containing encoded bits which are converted (E3) into symbols distributed according to subcarriers and time intervals, said program being **characterised in that** it comprises instructions which perform the following steps when said program is run in said transmitter:
distribution (E4) of the set of the signal symbols into as many separate subsets (SEᵢ) of signal symbols as the radiocommunication transmitter (EM) comprises antennas (AE1, AE2), each subset (SEᵢ) being allocated to one of the antennas (AE1, AE2), the union of said subsets being the set of the signal symbols (S), symbols being distributed between at least two subsets during at least one time interval of the signal (S), and symbols being distributed between at least two subsets for at least one subcarrier,
generation (E5) for each antenna (AE1; AE2) of a signal to be transmitted (Sᵢ) comprising the symbols of the subset (SEᵢ) allocated to said antenna (AE1; AE2), the symbols of the subset (SEᵢ) being distributed according to the same subcarriers and time intervals as those of the signal (S), and
synchronous transmission (E6) of the signals generated (Sᵢ) respectively by the antennas (AE1, AE2).

## Patentansprüche

1. Verfahren in einem Funksender (EM) zum Senden eines Signals (S) durch mindestens zwei Antennen (AE1, AE2), wobei das Signal kodierte Bits enthält, die in Symbole umgewandelt (E3) sind, die über Unterträger und Zeitintervalle verteilt sind, **dadurch gekennzeichnet, dass** es die folgenden Schritte umfasst:
- Aufteilung (E4) der Gesamtheit der Symbole des Signals in ebenso viele unzusammenhängende Untermengen (SEᵢ) von Symbolen des Signals, wie der Funksender (EM) Antennen (AE1, AE2) aufweist, wobei jede Untermenge (SEᵢ) speziell für eine der Antennen (AE1, AE2) bestimmt ist, wobei die Verbindung der Untermengen die Gesamtheit der Symbole des Signals (S) ist, wobei Symbole während mindestens eines Zeitintervalls des Signals (S) zwischen mindestens zwei Untermengen aufgeteilt sind, und wobei Symbole für mindestens einen Unterträger zwischen mindestens zwei Untermengen aufgeteilt sind,
- Erzeugung (E5) für jede Antenne (AE1; AE2) eines zu sendenden Signals (Sᵢ), das die Symbole der Untermenge (SEᵢ) umfasst, die speziell für die Antenne (AE1; AE2) bestimmt ist, wobei die Symbole der Untermenge (SEᵢ) über dieselben Unterträger und Zeitintervalle wie die des Signals (S) verteilt sind, und
- synchrones Senden (E6) der jeweils von den Antennen (AE1, AE2) erzeugten Signale (Sᵢ).

2. Verfahren nach Anspruch 1, das ein Verschachteln der kodierten Bits des Signals vor der Umwandlung dieser Letzten in die Symbole des Signals umfasst.

3. Verfahren nach Anspruch 1 oder 2, wobei die Untermengen von Symbolen eine im Wesentlichen identische Anzahl von Symbolen enthalten.

4. Verfahren nach einem der Ansprüche 1 bis 3, wobei die Untermengen von Symbolen für jedes Zeitintervall des Signals eine im Wesentlichen identische Anzahl von Symbolen enthalten.

5. Verfahren nach einem der Ansprüche 1 bis 4, wobei die Untermengen von Symbolen für jeden Unterträger des Signals eine im Wesentlichen identische Anzahl von Symbolen enthalten.

6. Funksender (EM) zum Senden eines Signals (S) durch mindestens zwei Antennen (AE1, AE2), wobei das Signal kodierte Bits enthält, die in Symbole umgewandelt sind, die über Unterträger und Zeitintervalle verteilt sind, **dadurch gekennzeichnet, dass** er Folgendes enthält:
- ein Mittel (REP) für die Aufteilung der Gesamtheit der Symbole des Signals in ebenso viele unzusammenhängende Untermengen (SEᵢ) von Symbolen des Signals, wie der Funksender (EM) Antennen (AE1, AE2) aufweist, wobei jede Untermenge (SEᵢ) speziell für die eine der Antennen (AE1, AE2) bestimmt ist, wobei die Verbindung der Untermengen die Gesamtheit der Symbole des Signals (S) ist, wobei Symbole während mindestens eines Zeitintervalls des Signals (S) zwischen mindestens zwei Untermengen aufgeteilt sind und wobei Symbole für mindestens einen Unterträger zwischen mindestens zwei Untermengen aufgeteilt sind,
- ein Mittel (ES1; ES2) für die Erzeugung eines zu sendenden Signals (Sᵢ) für jede Antenne (AE1; AE2), das die Symbole der Untermenge (SEᵢ) umfasst, die speziell für die Antenne (AE1; AE2) bestimmt ist, wobei die Symbole der Untermenge (SEᵢ) über dieselben Unterträger und Zeitintervalle wie die des Signals (S) verteilt sind, und
- Mittel (ES1, AE1; ES2, AE2) für das synchrone Senden der jeweils von den Antennen erzeugten Signale (Sᵢ).

7. Computerprogramm für den Einsatz in einem Sender (EM) zum Senden eines Signals durch mindestens zwei Antennen (AE1, AE2), wobei das Signal kodierte Bits enthält, die in Symbole umgewandelt (E3) sind, die über Unterträger und Zeitintervalle verteilt sind, wobei das Programm **dadurch gekennzeichnet ist, dass** es Anweisungen enthält, die, wenn das Programm in dem Sender ausgeführt wird, die folgenden Schritte ausführen:
- Aufteilung (E4) der Gesamtheit der Symbole des Signals in ebenso viele unzusammenhängende Untermengen (SEᵢ) von Symbolen des Signals, wie der Funksender (EM) Antennen (AE1, AE2) aufweist, wobei jede Untermenge (SEᵢ) speziell für eine der Antennen (AE1, AE2) bestimmt ist, wobei die Verbindung der Untermengen die Gesamtheit der Symbole des Signals (S) ist, wobei Symbole während mindestens eines Zeitintervalls des Signals (S) zwischen mindestens zwei Untermengen aufgeteilt sind und wobei Symbole für mindestens einen Unterträger zwischen mindestens zwei Untermengen aufgeteilt sind,
- Erzeugung (E5) für jede Antenne (AE1; AE2) eines zu sendenden Signals (Sᵢ), das die Symbole der Untermenge (SEᵢ) umfasst, die speziell für die Antenne (AE1; AE2) bestimmt ist, wobei die Symbole der Untermenge (SEᵢ) über dieselben Unterträger und Zeitintervalle wie die des Signals (S) verteilt sind, und
- synchrones Senden (E6) der jeweils von den Antennen (AE1, AE2) erzeugten Signale (Sᵢ).
